# EUROPEAN PATENT APPLICATION

(11) **EP 3 211 759 A1**
(43) Date of publication of application: **30.08.2017**
(21) Application number: 15853455.2
(22) Date of filing: 23.10.2015
(51) Int. Cl.: H02K 1/00, H02K 1/12, H02K 1/22, H02K 33/00, H02K 33/18, H02K 35/00

(54) **ELECTROMAGNETIC MOTOR WITH INCOMPLETE TURNS**

(30) Priority: 24.10.2014 CL 20142887
(71) Applicant: Garay Silva, Luis Ignacio, Santiago 8920243 (CL)
(72) Inventor: Garay Silva, Luis Ignacio, Santiago 8920243 (CL)
(74) Representative: Curell Suñol S.L.P.
(86) International application number: PCT/CL2015/000055
(87) International publication number: WO 2016/061704

(57) **Abstract**

The invention relates to a device for providing a motor that delivers a larger amount of produced energy than the amount required for the operation thereof, eliminating the need for a primary energy supply. The device consists of electromagnets produced with coils of incomplete turns arranged in a stator and permanent magnets arranged in a rotor. When an electric current is applied to the coils of incomplete turns, a force is generated in the magnets, causing the rotor to rotate and generate mechanical energy. The coils of incomplete turns are characterized in that, when the rotor rotates, they allow the magnets of the rotor to pass continuously through said coils.

## Description

### STATE OF THE ART

Motors are devices that provide mechanical energy. For this, they generally need a primary energy source, and the most common sources are electrical energy and fuels combustion.

Most motors are based on rotary devices.

In electric motors the generation of the mechanical force is obtained from the force produced by making circulating an electrical current through a conductor subjected to an electromagnetic field. This principle is common to electric motors, regardless of their size or if the motor is an Alternating current or Direct current.

Prior to the development of rare earth permanent magnets, the most used method to generate the electromagnetic field was with electromagnets. Wherein, by using coils of a conductive material through which an electric current is circulated, an electromagnetic field is generated, and depending on the arrangement of these coils different type of motors could result.

With the development of rare earth permanent magnets it has been possible to build motors with highly efficient permanent magnet electromagnetic field generators.

These rare earth magnetic materials have also allowed the development of a large number of magnetic motors capable of generating mechanical energy without a primary source, based only on the attraction and rejection of permanent magnets.

There is an electromagnetic motor where the generated mechanical force is due to the interaction of permanent magnets passing through the coils that generate the electromagnetic field; in this device, the only way to extract mechanical energy is by using a configuration similar to the pistons and by means of connecting rods transmitting the force generated to an axis in common, also known as crankshaft.

The present application offers a different way of extracting the mechanical energy in a permanent magnets configuration going through coils that generate an electromagnetic fields, allowing the production of an energy surplus between the produced energy and the necessary one to make it work.

Therefore, and taking into account the enormous energy requirements that are present in various human activities, the possibility of having a device that allows to generate an output of energy surplus between the produced energy and the energy that is necessary one to make it work, would be highly appreciated.

### BRIEF DESCRIPTION OF THE INVENTION

The solution proposed by this application, is based on the objective of obtaining a motor that delivers a larger amount of produced energy in relation to the one needed to make it work, thus eliminating the need of having to rely on a primary energy supply.

The main uses of the solution proposed by the present application would be the generation of electricity or the provision of mechanical energy to transporting means.

The device consists in electromagnets made of incomplete turns coils placed in a stator and permanent magnets placed in a rotor.

By applying an electrical current to the incomplete turns coils, a force is generated in the magnets making the rotor to rotate and generate mechanical energy.

The particularity shown by the incomplete turns coils is that they allow the rotor magnets to pass over and over again through said incomplete turns coils.

### ADVANTAGES OF THE PROPOSED TECHNOLOGY

The advantages of this configuration are:
**1.** - The force generated is largely a product of the permanent magnets magnetization, and therefore they require a lesser amount of energy supply to function.
**2.** - The force generated by the interaction of the permanent magnets with the electromagnets, can be used at any rotor radius. Providing that, at a greater rotor radius, a higher torque at the motor, to the same energy expenditure of the electromagnet.
**3.** - Since no supply of any kind is required, the production of energy would be local at the consumption center, thus eliminating the need to transport the generated energy.

### BRIEF DESCRIPTION OF THE FIGURES

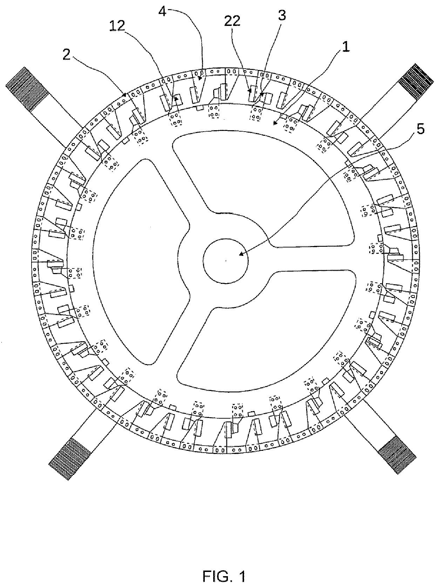

Figure 1: represents a general view from the present application device.

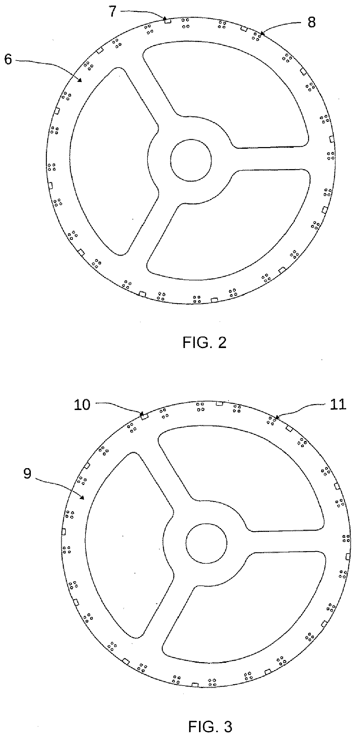

Figure 2: represents the front view of the rotor part 1, from the present application device.
Figure 3: represents the front view of the rotor part 2, from the present application device.
Figure 4: represents the way the rotor is assembled, from the present application device.
Figure 5: represents the front view of the permanent magnets from the present application device.
Figure 6: represents a side view of the permanent magnets from the present application device.
Figure 7: represents a partial view of the rotor, showing the arrangement of permanent magnets in relation to their polarity, from the present application device.
Figure 8: represents the front view of the magnet holders from the present application device.
Figure 9: represents the profile view of the magnet holders from the present application device.

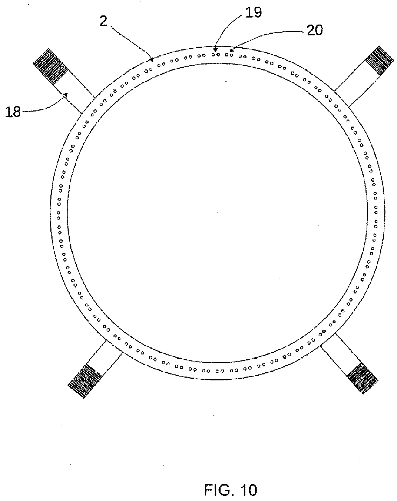

Figure 10: represents the front view of the stator from the present application device.

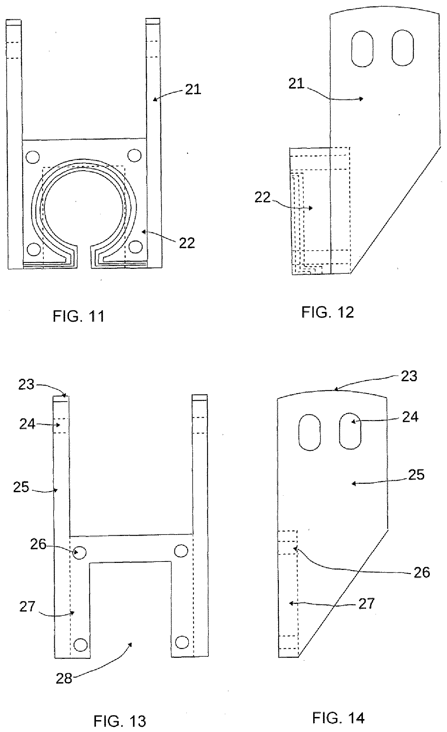

Figure 11: represents the front view of the electromagnet holders from the present application device.
Figure 12: represents the profile view of the electromagnet holders from the present application device.
Figure 13: represents the front view of the electromagnet holders base, from the present application device.
Figure 14: represents the profile view of the electromagnet holders base, from the present application device.
Figure 15: represents the front view of the coils holder of the electromagnet holders, from the present application device.
Figure 16: represents the profile view of the coils holder of the electromagnet holders, from the present application device.
Figure 17 represents a view of the adjustment to be made to the alignment of the electromagnet holders relative to the stator's radial axis, in order to adjust the alignment between said electromagnet holders and the permanent magnets, from the present application device.

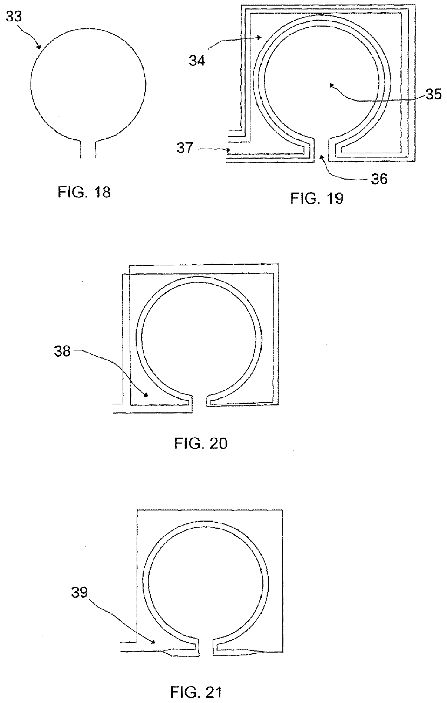

Figure 18: represents a view of the incomplete turn, from the present application device.
Figure 19: represents a view of the incomplete turns coil from the present application device.
Figure 20: represents a view of the incomplete turns coil connected in series, from the present application device.
Figure 21: represents a view of the incomplete turns coil connected in parallel, from the present application device.

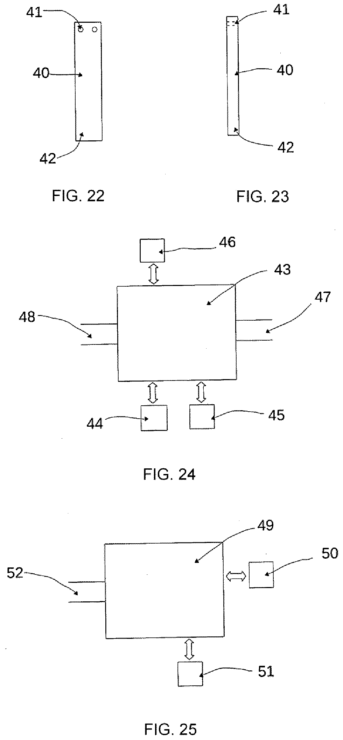

Figure 22: represents the front view of the position sensors holders, from the present application device.
Figure 23: represents the profile view of the position sensors holders, from the present application device.
Figure 24: represents a basic scheme of the electronic trigger control system, from the present application device.
Figure 25: represents a basic scheme of the central control system, from the present application device.

### DETAILED DESCRIPTION OF THE INVENTION

The incomplete turns coils electromagnetic motor consists basically of: a rotor (1), where the permanent magnet holders (3) are located; a stator (2), where the electromagnet holders (4) are located; trigger control systems (43); and a central control system (49).

In order for the generated mechanical energy to be used, the device has a shaft (5) integral with the rotor (1).

In the rotor(1) periphery are located the magnet holders (3), in which the permanent magnets (12) will be placed; these magnet holders (3) allow the transmission to the rotor (1) of the mechanical force generated by the interaction of the permanent magnets (12) with the incomplete turns coils (34).

The rotor (1) consists of two parts: Part 1 (6) and Part 2 (9).

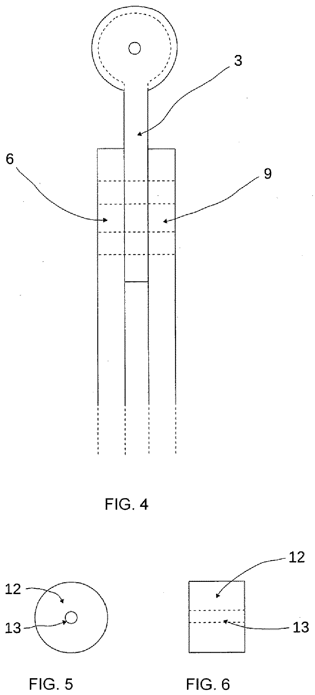

When assembling Part 1 (6) and Part 2 (9) of the rotor (1), the magnet holders (3) are in between both parts, as shown in Figure 4.

The holes (8) of Part 1 (6) and the holes (11) of Part 2 (9) coincide with the holes (17) of the magnet holders (3), allowing the assembly shown in Figure 4.

In Part 1 (6) of the rotor (1) are arranged the position markers (7) and they alternate in respect to the magnet holders (3); in Part 2 (9) of the rotor (1) are arranged the position markers (10) that alternate in respect to the magnet holders (3) and the position markers (7) of Part 1 (6).

This way of alternating position markers allows to control the direction of the current that the trigger control systems (43) will apply to the incomplete turns coils (34), as only one of the position sensors (44 or 45) will be activated.

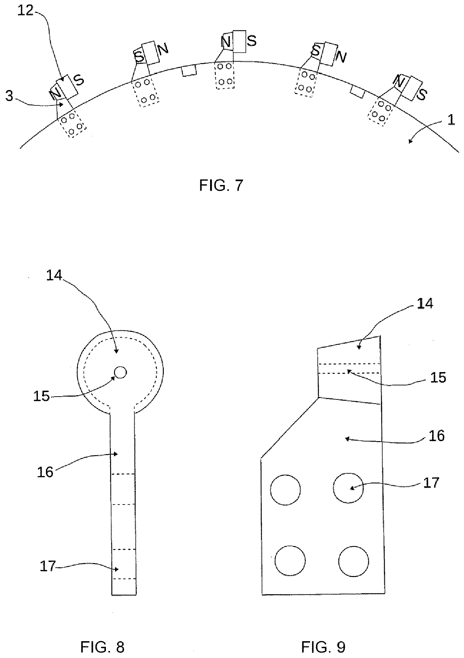

It must be possible to control the direction of the current that the trigger control system (43) will apply to the incomplete turns coil (34) because, as seen in Figure 7, the permanent magnets (12) alternate their polarity and in order to have the desired effect, i.e., to generate mechanical force in the direction of rotation of the rotor (1), the current direction must be the correct one.

The permanent magnets (12)are bolted to the magnet holders(3). For this, the hole (13) coincides with the hole (15) in the magnet holders (3).

The hole (15) of the magnet holders (3) is located in the support (14).

The support (14) facilitates the transmission of the generated mechanical energy to the rotor (1) by means of the interaction of the permanent magnet (12) with incomplete turns coils (34).

The support (14) is conical so as to facilitate the passage of the magnet holders (3) through the incomplete turns coils (34).

The larger diameter of the support (14) is always less than the diameter of the permanent magnet (3).

The transmission of the mechanical energy to the rotor (1) is made possible thanks to the rib (16) that connects the support (14) with the rotor (1).

The rib (16) thickness is such that it resists the generated mechanical force and allows its passage through the coil holders (22) and the incomplete turns coils (34), as said thickness is less than the separation (32) of the coils holder (22) and less than the separation (36) of the incomplete turns coils (34).

Equally, it is necessary to comply that the diameter of the permanent magnets (12) must be smaller than the inner diameter (31) of the coils holder (22), and also smaller than the inner diameter (35) of the incomplete turns coil (34) .

The stator (2) has on its periphery threads (18) for fixing the stator (2) to a fixed structure and centering it to the rotor (1); this ability to center the stator (2) to the rotor (1) allows that, when rotating the rotor (1), each of the permanent magnets (12) continuously pass through all incomplete turns coils (34) located in the stator (2).

The bases (21) of the electromagnets holder (4) are bolted directly to the stator (2); for this, the holes (24) of the base (21) of the electromagnets holder (4) match the holes (19) of the stator (2).

The holes (24) of the bases (21) of the electromagnets holder (4) are oval so as to facilitate the centering of the coils holder (22) to the permanent magnets (12).

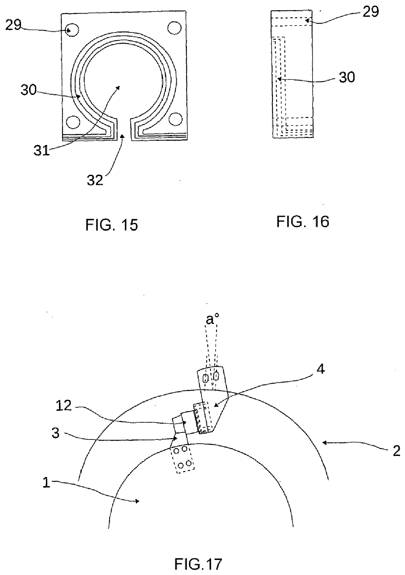

Depending on the diameter of the rotor (1), an adjustment is made in the alignment of the electromagnet holders (4) in respect of the radial axis of the stator (2), as shown in Figure 17, thus allowing for the best alignment between the permanent magnet (12) and the incomplete turns coils (34) located in the coils holder (22) of the electromagnets holder (4). For this, the holes (24) of the bases (21) are made in the adjustment angle.

The base (21) of the electromagnets holder (4) has a curvature (23) that matches the curvature of the outer diameter of the stator (2).

To the base (21) of the magnets holder (4) are fixed the coils holders (22). For this, the base (21) has a support (27), which facilitates this task.

In the support(27) of the base (21) of the electromagnets holder (4) are provided holes (26) that will allow the bolting of the coils holders (22) since said holes (26) coincide with the holes (29) in the coils holders (22).

In the same way that the inside diameter (35) of the incomplete turns coils (34), and the inner diameter (31) of the coils holder (22), the opening (28) of the support (27) of the base (21) of the electromagnets holder (4) is larger than the diameter of the permanent magnets (12). To withstand the generated reaction of the mechanical force in the coils holder (22) resulting from the interaction of the permanent magnets (12) with the incomplete turns coils (34), the base has two ribs (25) connecting the support (27) with the stator (2).

In the coils holder (22) there is a housing (30) where the incomplete turns coils (34) will be located.

This housing (30) may have several stages depending on how many turns (33) has the incomplete turns coil (34), and how these turns (33)are distributed.

There are two configurations for the incomplete turns coils (34). In the first configuration, the coils (33) are connected in series (38). In the second configuration, the coils (33) are connected in parallel (39) .

The trigger control system (43) has a power supply (48), two position sensors (44 and 45), the outlet (47) with which current is applied to the incomplete turns coils (34), through their respective feed (37), and a communications unit (46) that will allow to receive information from the communications unit (51) of the central control system (49).

As mentioned above, the trigger control system (43) has two position sensors (44 and 45) that are located on both sides of the stator (2), so that only one of these position sensors (44 or 45) will be activated by the position markers (7 or 10) such, that with this configuration it is possible to determine the polarities of the permanent magnets (12) that will be influenced by the incomplete turns coils (34), and therefore, also the direction in which current will be applied.

In addition, the position sensors (44 and 45) of the trigger control system determine the start of the trigger sequence, as when some of the position sensors (44 or 45) sense any of the position markers (7 or 10), starts the trigger sequence of the current.

The central control system (49) is fed with energy through the power supply (52).

To determine the rotor (1) speed, the central control system (49) has a RPM sensor (50).

With this information, the central control system (49) determines the delay, the magnitude, and the time of the current, that the trigger control systems (43) will apply to the incomplete turns coils (34). The delay is the time that trigger control systems (43) will wait to apply the current from the moment when one of the position sensors (44 or 45) detect some of the position markers (7 or 10), the magnitude is the value of current, and time is the duration in the application of this current.

As mentioned above, this information is transmitted to the trigger control systems (43) through the communications unit (51) of the central control system (49) .

The position sensors (44 and 45) are located in the housing (42) of the sensor holders (40); said sensor holders (40) are located on both sides of the stator (2), by means of holes (41) that coincide with the holes (20) that are located on both sides of the stator (2).

### USING THE DEVICE

Since the main feature of this device is producing a larger amount of energy than what is needed to function, it becomes evident that it can be used by feeding with mechanical energy an electricity generator, thus providing electricity to any activity, whether industrial, residential or other.

## Claims

1. Electromagnetic motor, which provides mechanical energy to any device that is required, where the energy produced is substantially larger than the energy needed to make it work, **CHARACTERIZED in that** it comprises the following elements: one or more rotors (1) wherein are located one or more permanent magnets (12) over one or more magnet holders (3), said elements being encapsulated by one or more stators (2) in which one or more electromagnet holders (4) are located, wherein one or more coil holders (22) are located, with one or more incomplete turns coils (34) having one or more incomplete turns (33); one or more trigger control systems (43); and one or more central control systems (49).

2. Electromagnetic motor according to Claim 1, **CHARACTERIZED in that** the magnet holders (3) and the electromagnet holders (4) are placed such that, upon rotation of the rotor (1), the permanent magnets (12) continuously pass through the incomplete turns coils (34) .

3. Electromagnetic motor according to Claim 1, **CHARACTERIZED in that** the incomplete turns coils (34) close their circuit in series (38), in parallel (39), or in a combination of both methods.

4. Electromagnetic motor according to Claim 1, **CHARACTERIZED in that** the separation (36) of the incomplete turns coils (34) has a maximum of 50 % the perimeter of the incomplete turn coils (34), and a minimum equal to the thickness of the rib (16) of the magnet holder (3) plus a tolerance.

5. Electromagnetic motor according to Claim 1, **CHARACTERIZED in that** the thickness of the rib (16) of the magnet holder (3) is the minimum necessary to withstand the mechanical force according to the manufacturing material.

6. Electromagnetic motor according to Claim 1, **CHARACTERIZED in that** the trigger control system (43) comprises electronic or mechanical means that determine the polarity of the permanent magnet (12) that will be influenced by the incomplete turns coils (34).

7. Electromagnetic motor according to Claim 1, **CHARACTERIZED in that** the trigger control system (43) comprises electronic or mechanical means which determine the start of the trigger sequence of the current that will be applied to the incomplete turns coil (34).

8. Electromagnetic motor according to Claim 1, **CHARACTERIZED in that** the trigger control system (43) comprises electronic or mechanical means applying the current to the incomplete turns coils (34), at the correct time, duration, direction, and magnitude.

9. Electromagnetic motor according to Claim 1, **CHARACTERIZED in that** the trigger control system (43) comprises electronic or mechanical means that prevent the flow of current through the incomplete turns coils (34) when they are not within the trigger sequence.

10. Electromagnetic motor according to Claim 1, **CHARACTERIZED in that** the central control system (49) comprises electronic or mechanical means which determine the rotor speed (1), or any other method for regulating the delivered instantaneous mechanical power from the vacuum condition to full load.

11. Electromagnetic motor according to Claim 1, **CHARACTERIZED in that** the rotor (1) and magnet holders (3) are an integrated piece.

12. Electromagnetic motor according to Claim 1, **CHARACTERIZED in that** the stator (2) and the electromagnet holders (4) are an integrated piece.

13. Electromagnetic motor according to Claim 1, **CHARACTERIZED in that** the base (21) and the coils holder (22) of the electromagnets holders (4) are one integrated piece.

14. Electromagnetic motor according to Claim 1, **CHARACTERIZED in that** it has mechanical means that allow to adjust the alignment and centering of the incomplete turns coils (34) located in the coils holder (22) with respect of the permanent magnets (12).

15. Electromagnetic motor according to Claim 1, **CHARACTERIZED in that** in the rotor (1) are located the electromagnet holders (4), and in the stator (2) are located the magnet holders (3).

16. Electromagnetic motor according to Claim 1, **CHARACTERIZED in that** the rotor (1) encapsulates the stator (2).

17. Electromagnetic motor according to Claim 1, **CHARACTERIZED in that** the material of the permanent magnets (12) is neodymium, or other magnetic material.

18. Electromagnetic motor according to Claim 1, **CHARACTERIZED in that** the shape of the permanent magnets (12) is a cylinder or another shape that allows its passage through the incomplete turns coils (34).

19. Electromagnetic motor according to Claim 1, **CHARACTERIZED in that** the permanent magnets (12) are fixed in their position by mechanical means, an adhesive, or any other method that allows to fix it in its position.

20. Electromagnetic motor according to Claim 1, **CHARACTERIZED in that** the material of the incomplete turns coils (34) is enamelled copper conductor, or another metal, metal alloy or material capable of generating an electromagnetic field in the incomplete turns coils (34) when a current flows through it.

21. Electromagnetic motor according to Claim 1, **CHARACTERIZED in that** the incomplete turns coils (34) are incomplete-circular-shaped, or other incomplete shape that allows that the permanent magnets (12) can pass through them.

22. Electromagnetic motor according to Claim 1, **CHARACTERIZED in that** the material of the magnet holders (3) is non-magnetic, or some other material that does not affect the magnetic fields or generates induced currents.

23. Electromagnetic motor according to Claim 1, **CHARACTERIZED in that** the material of the electromagnet holders (4) is non-magnetic, or another material that does not affect the magnetic fields or generates induced currents.

24. Electromagnetic motor according to Claim 1, **CHARACTERIZED in that** the material of the coils holders (22) is non-magnetic, or some other material that does not affect the magnetic fields or generates induced currents.

25. Electromagnetic motor according to Claim 1, **CHARACTERIZED in that** the material of the rotor (1) is non-magnetic, or some other material that does not affect the magnetic fields or generates induced currents.

26. Electromagnetic motor according to Claim 1, **CHARACTERIZED in that** the material of the stator (2) is non-magnetic, or some other material that does not affect the magnetic fields or generates induced currents.
